# EUROPEAN PATENT APPLICATION

(11) **EP 4 422 291 A1**
(43) Date of publication of application: **28.08.2024**
(21) Application number: 22882945.3
(22) Date of filing: 20.10.2022
(51) Int. Cl.: H04W 52/36, H04W 72/04

(54) **INFORMATION REPORTING METHOD, INFORMATION RECEIVING METHOD, AND TERMINAL, NETWORK-SIDE DEVICE AND STORAGE MEDIUM**

(30) Priority: 22.10.2021 CN 202111234280
(71) Applicant: VIVO MOBILE COMMUNICATION CO., LTD., Dongguan, Guangdong 523863 (CN)
(72) Inventor: LIU, Ziqi, Dongguan, Guangdong 523863 (CN); FENG, Sanjun, Dongguan, Guangdong 523863 (CN); WANG, Ruixin, Dongguan, Guangdong 523863 (CN)
(74) Representative: Lavoix
(86) International application number: PCT/CN2022/126441
(87) International publication number: WO 2023/066340

(57) **Abstract**

This application provides an information reporting method, an information receiving method, a terminal, a network side device, and a storage medium, and relates to the field of communication technologies. The information reporting method according to embodiments of this application includes: reporting, by a terminal, indication information, where the indication information is used for indicating that maximum total power of the terminal in a target frequency band combination is a sum of maximum power supported by each frequency band in the target frequency band combination.

## Description

### CROSS-REFERENCE TO RELATED APPLICATIONS

This application claims priority to Chinese Patent Application No. 202111234280.9, filed in China on October 22, 2021, the entire content of which is incorporated herein by reference.

### TECHNICAL FIELD

This application relates to the field of communication technologies, and specifically, to an information reporting method, an information receiving method, a terminal, a network side device, and a storage medium.

### BACKGROUND

In some communication systems, a power class (power class) is defined for a terminal. For example, power of the terminal is defined as 23 dBm, 26 dBm, and other power classes, and a power class supported by each frequency band may be defined specifically. A frequency band combination technology is introduced into some communication systems to support the terminal in performing communication on multiple frequency bands in a frequency band combination at the same time, but maximum power of the terminal according to a current communication protocol in the frequency band combination is maximum power supported by each frequency band in the frequency band combination. For example, the frequency band combination includes a frequency band 1 and a frequency band 2, where a maximum power class supported by the frequency band 1 is 23 dBm, and a maximum power class supported by the frequency band 2 is 26 dBm. Therefore, currently, the maximum power of the terminal in the frequency band combination is 26 dBm. In this way, since the maximum power of the terminal in the frequency band combination is the maximum power supported by each frequency band in the frequency band combination, power back-off easily occurs when the terminal operates in the frequency band combination.

### SUMMARY

Embodiments of this application provide an information reporting method, an information receiving method, a terminal, a network side device, and a storage medium, to resolve a problem that power back-off easily occurs when a terminal operates in a frequency band combination.

According to a first aspect, an information reporting method is provided, including:

reporting, by a terminal, indication information, where the indication information is used for indicating that maximum total power of the terminal in a target frequency band combination is a sum of maximum power supported by each frequency band in the target frequency band combination.

According to a second aspect, an information receiving method is provided, including:

receiving, by a network side device, indication information reported by a terminal, where the indication information is used for indicating that maximum total power of the terminal in a target frequency band combination is a sum of maximum power supported by each frequency band in the target frequency band combination.

According to a third aspect, an information reporting apparatus is provided, including:

a reporting module, configured to report indication information, where the indication information is used for indicating that maximum total power of a terminal in a target frequency band combination is a sum of maximum power supported by each frequency band in the target frequency band combination.

According to a fourth aspect, an information receiving apparatus is provided, including:

a receiving module, configured to receive indication information reported by a terminal, where the indication information is used for indicating that maximum total power of the terminal in a target frequency band combination is a sum of maximum power supported by each frequency band in the target frequency band combination.

According to a fifth aspect, a terminal is provided, including: a memory, a processor, and a program or an instruction stored in the memory and executable on the processor, where when the program or the instruction is executed by the processor, the steps in the information reporting method according to the embodiments of this application are implemented.

According to a sixth aspect, a terminal is provided, including a processor and a communication interface, where the communication interface is configured to report indication information, and the indication information is used for indicating that maximum total power of the terminal in a target frequency band combination is a sum of maximum power supported by each frequency band in the target frequency band combination.

According to a seventh aspect, a network side device is provided, including: a memory, a processor, and a program or an instruction stored in the memory and executable on the processor, where when the program or the instruction is executed by the processor, the steps in the information receiving method according to the embodiments of this application are implemented.

According to an eighth aspect, a network side device is provided, including a processor and a communication interface, where the communication interface is configured to receive indication information reported by a terminal, and the indication information is used for indicating that maximum total power of the terminal in a target frequency band combination is a sum of maximum power supported by each frequency band in the target frequency band combination.

According to a ninth aspect, a readable storage medium is provided, where a program or an instruction is stored in the readable storage medium, and when the program or the instruction is executed by a processor, the steps in the information reporting method according to the embodiments of this application are implemented, or when the program or the instruction is executed by a processor, the steps in the information receiving method according to the embodiments of this application are implemented.

According to a tenth aspect, a computer program/program product is provided, where the computer program/program product is stored in a non-volatile storage medium, and the program/program product is executed by at least one processor to implement the steps in the information reporting method according to the embodiments of this application, or the program/program product is executed by at least one processor to implement the steps in the information receiving method according to the embodiments of this application.

In the embodiments of this application, a terminal reports indication information, where the indication information is used for indicating that maximum total power of the terminal in a target frequency band combination is a sum of maximum power supported by each frequency band in the target frequency band combination. In this way, it is supported that the maximum total power of the terminal in the target frequency band combination is the sum of the maximum power supported by each frequency band in the target frequency band combination, so that power back-off of the terminal in the target frequency band combination can be reduced.

### BRIEF DESCRIPTION OF THE DRAWINGS

FIG. 1 is a block diagram of a wireless communication system to which an embodiment of this application is applicable;
FIG. 2 is a flowchart of an information reporting method according to an embodiment of this application;
FIG. 3 is a flowchart of an information receiving method according to an embodiment of this application;
FIG. 4 is a structural diagram of an information reporting apparatus according to an embodiment of this application;
FIG. 5 is a structural diagram of an information receiving apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DETAILED DESCRIPTION

The following clearly describes technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

Terms "first" and "second" in the specification and claims of this application are used to distinguish between similar objects, but are unnecessarily used to describe a specific sequence or order. It should be understood that terms used in such a way are interchangeable in proper circumstances, so that the embodiments of this application can be implemented in other sequences than the sequence illustrated or described herein. In addition, the objects distinguished by "first" and "second" are usually of the same category, and a quantity of the objects is not limited. For example, there may be one or more first objects. In addition, "and/or" in this specification and the claims represents at least one of connected objects, and the character "/" generally indicates an "or" relationship between associated objects.

It should be noted that a technology described in the embodiments of this application is not limited to a long term evolution (Long Term Evolution, LTE)/LTE-advanced(LTE-Advanced, LTE-A) system, and may further be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. Terms "system" and "network" in the embodiments of this application may usually be used interchangeably. The described technology may be applied to the foregoing mentioned systems and radio technologies, and may also be applied to other systems and radio technologies. The following describes a new radio (New Radio, NR) system for an exemplary purpose, and NR terms are used in most of the descriptions below. These technologies may also be applied to an application other than an NR system application, such as a sixth generation (6th Generation, 6G) communication system.

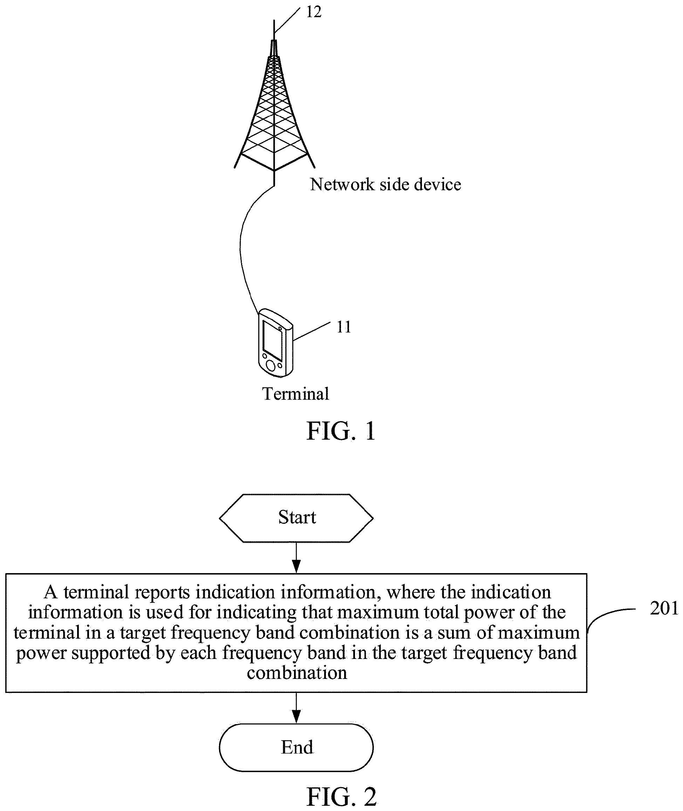

FIG. 1 is a block diagram of a wireless communication system to which an embodiment of this application is applicable. The wireless communication system includes a terminal 11 and a network side device 12.

The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), or a smart home (home devices with a wireless communication function, such as a refrigerator, a television, a washing machine, a furniture, or the like). The wearable device includes a smart watch, a smart band, a smart headset, a smart glass, a smart jewelry (a smart bangle, a smart bracelet, a smart ring, a smart necklace, a smart anklet, or a smart anklet bracelet), a smart wristlet, a smart clothes, a game console, or the like. It should be noted that a specific type of the terminal 11 is not limited in the embodiments of this application.

The network side device 12 may be a core network network element or a base station, where the core network network element may be an access and mobility management function (Access and Mobility Management Function, AMF), a mobility management entity (Mobility Management Entity, MME), and the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmitting and receiving point (Transmitting Receiving Point, TRP), or another appropriate term in the field, and provided that a same technical effect can be achieved, the base station is not limited to a specific technical term. It should be noted that, a base station in an NR system is merely used as an example in the embodiments of this application, and a specific type of the base station is not limited.

The following describes in detail an information reporting method, an information receiving method, a terminal, a network side device, and a storage medium provided in the embodiments of this application with reference to the accompanying drawings and through some embodiments and application scenarios thereof.

Refer to FIG. 2, FIG. 2 is a flowchart of an information reporting method according to an embodiment of this application. As shown in FIG. 2, the following step is included:

Step 201. A terminal reports indication information, where the indication information is used for indicating that maximum total power of the terminal in a target frequency band combination is a sum of maximum power supported by each frequency band in the target frequency band combination.

The reporting indication information may be reporting the indication information to a network side device, to indicate that the maximum total power of the terminal in the target frequency band combination is the sum of the maximum power supported by each frequency band in the target frequency band combination.

The target frequency band combination may be one or more frequency band combinations. For example, in some implementations, the target frequency band combination may be a specific frequency band combination, or in some implementations, the target frequency band combination may be any frequency band combination of the terminal.

In the embodiments of this application, the frequency band combination may include two frequency bands, three frequency bands, or more than three frequency bands.

The maximum total power of the terminal in the target frequency band combination may be a maximum value of total power of adding power of the terminal in all the frequency bands in the target frequency band combination. For example, the target frequency band combination includes a frequency band A and a frequency band B. Maximum power of the terminal supported on the frequency band A is 23 dBm, and maximum power of the terminal supported on the frequency band B is 26 dBm, so that maximum power in the target frequency band combination equals to 27.8 dBm (23 dBm+26 dBm). Further, when the terminal operates on the frequency band A and the frequency band B at the same time, the maximum power is 23 dBm when the terminal operates on the frequency band A, and the maximum power is 26 dBm when the terminal operates on the frequency band B.

In the embodiments of this application, the maximum total power in the target frequency band combination and the maximum power supported by each frequency band may both refer to transmission power of the terminal. The maximum power supported by each frequency band includes but is not limited to 23 dBm, 26 dBm, 29 dBm, 31 dBm, 27.8 dBm, and the like.

In the embodiments of this application, the indication information may be reported through the foregoing step, to indicate that the maximum total power of the terminal in the target frequency band combination is the sum of the maximum power supported by each frequency band in the target frequency band combination. In this way, maximum power when the terminal operates on any frequency band in the target frequency band combination is the maximum power supported by the frequency band, so that power back-off does not need to be performed, and an effect of reducing power back-off of the terminal is achieved. In addition, reducing the power back-off may prevent the terminal from unnecessary communication rate decline or communication interruption, thereby improving the communication performance of the terminal.

In addition, the foregoing reporting of the indication information may ensure synchronization of power control between a network side and the terminal, thereby reducing unnecessary power back-off and avoiding instantaneous communication rate decline or communication interruption.

In the embodiments of this application, the maximum power of the terminal supported on each frequency band may be a maximum power class defined in a protocol. For example, a single frequency band power class defined in some protocols is 23 dBm or 26 dBm. Hardware capabilities of some terminals are often higher than the maximum power class defined in the protocol. Therefore, in the embodiments of this application, the maximum total power of the terminal in the target frequency band combination is the sum of the maximum power supported by each frequency band in the target frequency band combination, so that the hardware capability of the terminal may be fully utilized.

In an optional implementation, the indication information includes:
power aggregation supported (Power Aggregation Supported).

The power aggregation supported may be a signaling message newly defined in the embodiments of this application. Certainly, in some implementations, the foregoing indication information may be another indication. For example, the indication information may directly be referred to as a maximum power indication, a maximum power indication in a frequency band combination, or the like.

Optionally, in a case that the power aggregation supported is in an enabled state, the power aggregation supported is used for indicating that maximum power of the terminal in the frequency band combination is the sum of the maximum power supported of each frequency band in the frequency band combination.

In this way, through the state of the power aggregation supported, the maximum power in the target frequency band combination is achieved.

Certainly, in the embodiments of this application, indication is not limited to being performed through the enabled state of the power aggregation supported. For example, in some implementations, the enabled state of the power aggregation supported may not be defined, instead, when the indication is included in a reported message, it indicates that the maximum power of the terminal in the frequency band combination is the sum of the maximum power of each frequency band in the frequency band combination.

In an optional implementation, in a case that the terminal supports power aggregation under a dual connectivity (Dual Connectivity, DC) condition or a carrier aggregation condition, power of the terminal on each frequency band in the target frequency band combination is independent of each other.

The DC includes but is not limited to an evolved universal terrestrial radio access and new radio dual connectivity (E-UTRA-NR Dual Connectivity, ENDC), an NR and E-UTRA dual connectivity (NR-E-UTRA Dual Connectivity, NEDC), and an NR and NR dual connectivity (NR-NR Dual Connectivity, NR DC).

That power of the terminal on each frequency band in the target frequency band is independent of each other may be understood as that each frequency band in the target frequency band combination does not need to support power sharing between carriers, and the maximum power supported by each frequency band may be used on carriers of the frequency band.

In this implementation, the power of the terminal on each frequency band in the target frequency band combination is independent of each other, to realize that each frequency band in the target frequency band combination does not need to support power sharing between carriers, so that the terminal may use the maximum power supported by each frequency band on carriers of each frequency band, to improve the communication performance.

In an implementation, when the terminal reports the power aggregation supported (Power Aggregation Supported), maximum power of the terminal under a corresponding frequency band combination is a sum of maximum power of a single frequency band in the frequency band combination, the terminal no longer has a power limit under carrier aggregation, and power back-off of each channel may be avoided correspondingly, so that a corresponding mechanism may be simplified.

In an optional implementation, that a terminal reports indication information includes:

The terminal reports the indication information under a DC condition or a multi-carrier aggregation condition.

The DC condition may be that the terminal operates in a DC state, and the multi-carrier aggregation condition may be that the terminal operates in a multi-carrier aggregation state. For the DC, reference may be made to the corresponding description above. Details are not described herein. The multi-carrier aggregation may include intra-band carrier aggregation or inter-band carrier aggregation.

This implementation can support signaling reported at the maximum power under the DC or the carrier aggregation condition, to ensure synchronization of power control between the network side and the terminal, and at the same time, the hardware capability of the terminal may be fully utilized, thereby reducing unnecessary power back-off, and avoiding instantaneous communication rate decline or communication interruption.

In an implementation, under the multi-carrier aggregation condition, the terminal adds a signaling message to indicate that the power aggregation supported is in an enabled state (Power Aggregation Supported= {enabled}). When the terminal reports the power aggregation supported, it indicates that the maximum power of the terminal in the frequency band combination is the sum of the maximum power supported by a single frequency band in the frequency band combination. A power class of the single frequency band may be 23 dBm, 26 dBm, or the like. The frequency band combination includes two frequency bands, three frequency bands, or more frequency bands.

In an implementation, under an ENDC condition, the terminal adds an optional signaling message to indicate that the power aggregation supported is in an enabled state (Power Aggregation Supported= {enabled}). When the terminal reports the power aggregation supported, it indicates that the maximum power of the terminal in the frequency band combination is the sum of the maximum power supported by a single frequency band in the frequency band combination. A power class of the single frequency band may be 23 dBm, 26 dBm, or the like.

In an optional implementation, supported maximum power of the terminal on a target frequency band in the target frequency band combination corresponds to a maximum power class of the target frequency band, and the target frequency band is any frequency band in the target frequency band combination.

The target frequency band combination includes a frequency band A and a frequency band B. A maximum power class of the terminal on the frequency band A is 23 dBm, and a maximum power class of the terminal on the frequency band B is 26 dBm. When the terminal performs sending only on the frequency band A in a slot 1, the maximum power is 23 dBm, and when the terminal performs sending only on the frequency band B in a slot 2, the maximum power is 26 dBm. If the terminal performs sending on the frequency band A and the frequency band B at the same time in a slot 3, the terminal performs sending on a frequency band A at the maximum power of 23 dBm, and the terminal performs sending on the frequency band B at the maximum power of 26 dBm.

In an optional implementation, the method further includes:

The terminal performs communication on the target frequency band combination based on the maximum total power.

In the embodiments of this application, a terminal reports indication information, where the indication information is used for indicating that maximum total power of the terminal in a target frequency band combination is a sum of maximum power supported by each frequency band in the target frequency band combination. In this way, it is supported that the maximum total power of the terminal in the target frequency band combination is the sum of the maximum power supported by each frequency band in the target frequency band combination, so that power back-off of the terminal in the target frequency band combination can be reduced.

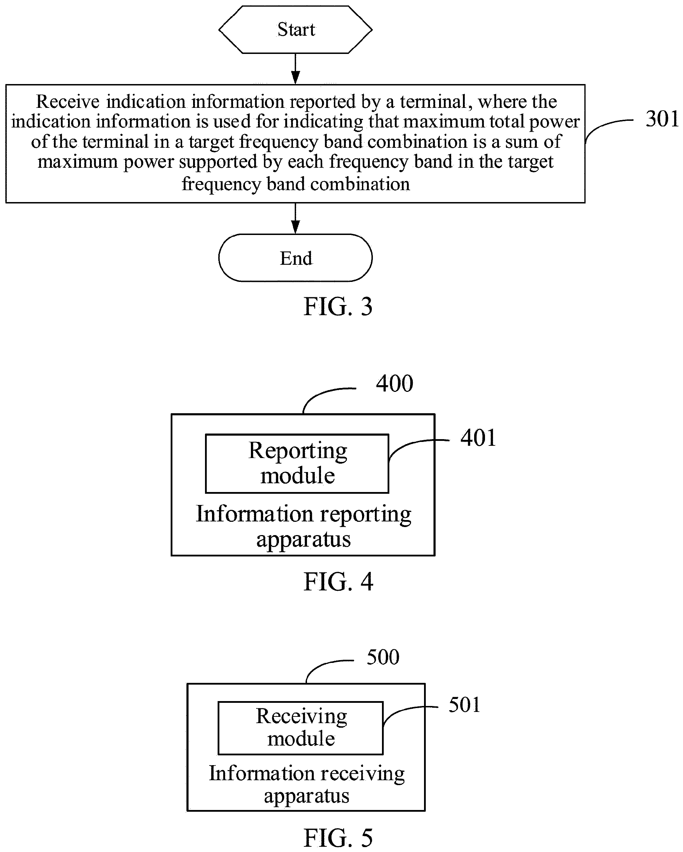

Refer to FIG. 3, FIG. 3 is a flowchart of an information receiving method according to an embodiment of this application. As shown in FIG. 3, the following step is included:

Step 301. Receive indication information reported by a terminal, where the indication information is used for indicating that maximum total power of the terminal in a target frequency band combination is a sum of maximum power supported by each frequency band in the target frequency band combination.

Optionally, the indication information includes power aggregation supported.

Optionally, in a case that the power aggregation supported is in an enabled state, the power aggregation supported is used for indicating that maximum power of the terminal in the frequency band combination is the sum of the maximum power supported of each frequency band in the frequency band combination.

Optionally, that a network side device receives indication information reported by a terminal includes:

The network side device receives the indication information reported by the terminal under a DC condition or a multi-carrier aggregation condition.

It should be noted that, this embodiment is an implementation of a corresponding network side device in the embodiment shown in FIG. 2. For a specific implementation of this embodiment, reference may be made to the related descriptions in the embodiment shown in FIG. 2. To avoid repeated descriptions, details are not described again in this embodiment.

Refer to FIG. 4, FIG. 4 is a structural diagram of an information reporting apparatus according to an embodiment of this application. As shown in FIG. 4, the apparatus includes:

a reporting module 401, configured to report indication information, where the indication information is used for indicating that maximum total power of a terminal in a target frequency band combination is a sum of maximum power supported by each frequency band in the target frequency band combination.

Optionally, the indication information includes:
power aggregation supported.

Optionally, in a case that the power aggregation supported is in an enabled state, the power aggregation supported is used for indicating that maximum power of the terminal in the frequency band combination is the sum of the maximum power supported of each frequency band in the frequency band combination.

Optionally, in a case that the terminal supports power aggregation under a dual connectivity DC condition or a carrier aggregation condition, power of the terminal on each frequency band in the target frequency band combination is independent of each other.

Optionally, the reporting module is configured to report the indication information under a DC condition or a multi-carrier aggregation condition.

Optionally, supported maximum power of the terminal on a target frequency band in the target frequency band combination corresponds to a maximum power class of the target frequency band, and the target frequency band is any frequency band in the target frequency band combination.

Optionally, the apparatus further includes:
a communication module, configured to perform communication on the target frequency band combination based on the maximum total power.

The information reporting apparatus in this embodiment of this application may reduce power back-off of the terminal.

The information reporting apparatus in this embodiment of this application may be an apparatus, an apparatus with an operating system, or an electronic device, or may be a component, an integrated circuit, or a chip in a terminal. The apparatus or the electronic device may be a mobile terminal, or may be a non-mobile terminal. For example, the mobile terminal may include but is not limited to the types of the terminal 11 that are listed above, and the non-mobile terminal may be a server, a network attached storage (Network Attached Storage, NAS), a personal computer (Personal Computer, PC), a television (Television, TV), a teller machine, a self-service machine, or the like, which is not specifically limited in the embodiments of this application.

The information reporting apparatus provided in this embodiment of this application can implement each process implemented in the method embodiment in FIG. 2, and achieve a same technical effect. To avoid repetition, details are not described herein again.

Refer to FIG. 5, FIG. 5 is a structural diagram of an information receiving apparatus according to an embodiment of this application. As shown in FIG. 5, the apparatus includes:
a receiving module 501, configured to receive indication information reported by a terminal, where the indication information is used for indicating that maximum total power of the terminal in a target frequency band combination is a sum of maximum power supported by each frequency band in the target frequency band combination.

Optionally, the indication information includes:
power aggregation supported.

Optionally, in a case that the power aggregation supported is in an enabled state, the power aggregation supported is used for indicating that maximum power of the terminal in the frequency band combination is the sum of the maximum power supported of each frequency band in the frequency band combination.

Optionally, the receiving module 501 is configured to receive the indication information reported by the terminal under a DC condition or a multi-carrier aggregation condition.

The foregoing information receiving apparatus may reduce power back-off of the terminal.

The information receiving apparatus in this embodiment of this application may be an apparatus, an apparatus with an operating system, or an electronic device, or may be a component, an integrated circuit, or a chip in a network side device. The apparatus or the network side device may be a base station.

The information receiving apparatus provided in this embodiment of this application can implement each process implemented in the method embodiment in FIG. 3, and achieve a same technical effect. To avoid repetition, details are not described herein again.

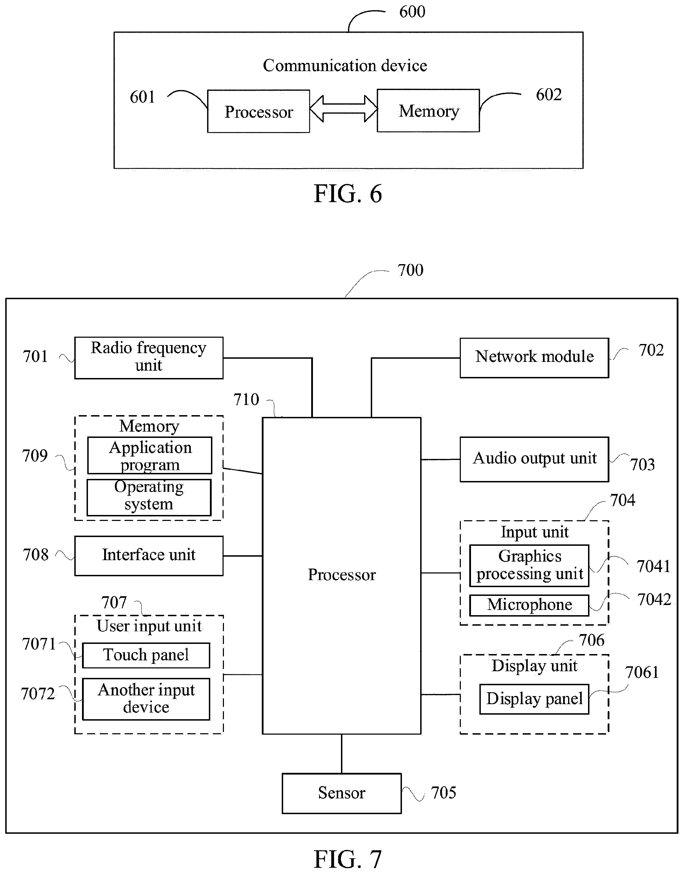

Optionally, as shown in FIG. 6, an embodiment of this application further provides a communication device 600, including a processor 601, a memory 602, and a program or an instruction stored in the memory 602 and executable on the processor 601. For example, when the communication device 600 is a terminal, each process of the information receiving method embodiment on a network side device side is implemented when the program or the instruction is executed by the processor 601, and a same technical effect can be achieved. When the communication device 600 is a network side device, each process of the information reporting method embodiment on a terminal side is implemented when the program or the instruction is executed by the processor 601, and a same technical effect can be achieved. To avoid repetition, details are not described herein again. The communication device may be a terminal or a network side device.

An embodiment of this application further provides a communication device, including a processor and a communication interface, where the processor or the communication interface is configured to report indication information, and the indication information is used for indicating that maximum total power of a terminal in a target frequency band combination is a sum of maximum power supported by each frequency band in the target frequency band combination.

Alternatively, the communication interface is configured to receive indication information reported by a terminal, where the indication information is used for indicating that maximum total power of the terminal in a target frequency band combination is a sum of maximum power supported by each frequency band in the target frequency band combination.

The communication device embodiment corresponds to the method embodiments shown in FIG. 2 and FIG. 3. Each implementation process and implementation of the foregoing method embodiments can be applied to the communication device embodiment, and a same technical effect can be achieved.

Specifically, FIG. 7 is a schematic diagram of a hardware structure of a terminal according to an embodiment of this application.

A terminal 700 includes but is not limited to at least some components of a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to each component. The power supply may be logically connected to the processor 710 through a power management system, thereby implementing functions such as charging, discharging, and power consumption management through the power management system. The terminal structure shown in FIG. 2 does not constitute a limitation on the communication device, and the terminal may include more or fewer components than those shown in the figure, or combine some components, or use a different component deployment. Details are not described herein again.

It should be understood that, in the embodiments of this application, the input unit 704 may include a graphics processing unit (Graphics Processing Unit, GPU) 7041 and a microphone 7042. The graphics processing unit 7041 processes image data of a static picture or a video that is obtained by an image acquisition device (such as a camera) in a video acquisition mode or an image acquisition mode. The display unit 706 may include a display panel 7061. The display panel 7061 may be configured in a form of a liquid crystal display, an organic light-emitting diode, or the like. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional key (such as a volume control key or a switch key), a track ball, a mouse, and a joystick. Details are not described herein again.

In the embodiments of this application, after receiving downlink data from a network side device, the radio frequency unit 701 sends the downlink data to the processor 710 for processing. In addition, the radio frequency unit sends uplink data to the network side device. Generally, the radio frequency unit 701 includes but is not limited to an antenna, at least one amplifier, a transceiver, a coupler, a low noise amplifier, a duplexer, and the like.

The memory 709 is configured to store a software program or an instruction and various data. The memory 709 may mainly include a program or instruction storage area and a data storage area, where the program or instruction storage area may store an operating system, an application program or an instruction required for at least one function (for example, a sound playback function, an image display function, and the like), and the like. In addition, the memory 709 may include a high-speed random access memory and may also include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory may be at least one magnetic disk storage device, a flash memory device, or another non-volatile solid-state storage device.

The processor 710 may include one or more processing units. Optionally, the processor 710 may integrate an application processor and a modem processor, where the application processor mainly processes an operating system, a user interface, an application program or instruction, and the like, and the modem processor mainly processes wireless communication, such as a baseband processor. It should be understood that the modem processor may not be integrated into the processor 710.

The radio frequency unit 701 is configured to report indication information, where the indication information is used for indicating that maximum total power of the terminal in a target frequency band combination is a sum of maximum power supported by each frequency band in the target frequency band combination.

Optionally, the indication information includes:
power aggregation supported.

Optionally, in a case that the power aggregation supported is in an enabled state, the power aggregation supported is used for indicating that maximum power of the terminal in the frequency band combination is the sum of the maximum power supported of each frequency band in the frequency band combination.

Optionally, in a case that the terminal supports power aggregation under a dual connectivity DC condition or a carrier aggregation condition, power of the terminal on each frequency band in the target frequency band combination is independent of each other.

Optionally, that a terminal reports the indication information includes:

The terminal reports the indication information under a DC condition or a multi-carrier aggregation condition.

Optionally, supported maximum power of the terminal on a target frequency band in the target frequency band combination corresponds to a maximum power class of the target frequency band, and the target frequency band is any frequency band in the target frequency band combination.

The terminal may reduce power back-off of the terminal.

Specifically, the terminal in this embodiment of this application further includes an instruction or a program that is stored in the memory 709 and executable on the processor 710, and the processor 710 invokes the instruction or the program in the memory 709 to execute the method performed by each module shown in FIG. 4, and a same technical effect can be achieved. To avoid repetition, details are not described herein.

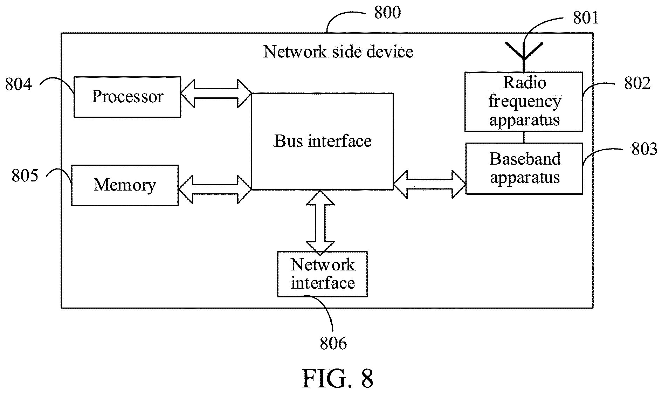

Specifically, an embodiment of this application further provides a network side device. As shown in FIG. 8, a network side device 800 includes an antenna 801, a radio frequency apparatus 802, and a baseband apparatus 803. The antenna 801 is connected to the radio frequency apparatus 802. In an uplink direction, the radio frequency apparatus 802 receives information through the antenna 801 and sends the received information to the baseband apparatus 803 for processing. In a downlink direction, the baseband apparatus 803 processes to-be-sent information and sends the to-be-sent information to the radio frequency apparatus 802. The radio frequency apparatus 802 processes the received information and sends the information out through the antenna 801.

The foregoing radio frequency apparatus may be located in the baseband apparatus 803, the method performed by the network side device in the foregoing embodiment may be implemented in the baseband apparatus 803, and the baseband apparatus 803 includes a processor 804 and a memory 805.

The baseband apparatus 803 may include, for example, at least one baseband board, and a plurality of chips are disposed on the baseband board. As shown in FIG. 8, one of the chips is, for example, the processor 804, and is connected to the memory 805 to invoke a program in the memory 805 to perform operations of a network device shown in the foregoing method embodiment.

The baseband apparatus 803 may further include a network interface 806 configured to exchange information with the radio frequency apparatus 802, and the interface is, for example, a common public radio interface (Common Public Radio Interface, CPRI).

The radio frequency apparatus 802 is configured to receive indication information reported by a terminal, where the indication information is used for indicating that maximum total power of the terminal in a target frequency band combination is a sum of maximum power supported by each frequency band in the target frequency band combination.

Optionally, the indication information includes:
power aggregation supported.

Optionally, in a case that the power aggregation supported is in an enabled state, the power aggregation supported is used for indicating that maximum power of the terminal in the frequency band combination is the sum of the maximum power supported of each frequency band in the frequency band combination.

Optionally, that a network side device receives indication information reported by a terminal includes:

The network side device receives the indication information reported by the terminal under a DC condition or a multi-carrier aggregation condition.

The network side device may reduce power back-off of the terminal.

Specifically, the network side device in this embodiment of this application further includes an instruction or a program that is stored in the memory 805 and executable on the processor 804, and the processor 804 invokes the instruction or the program in the memory 805 to execute the method performed by each module shown in FIG. 5, and a same technical effect can be achieved. To avoid repetition, details are not described herein.

An embodiment of this application provides a readable storage medium, where the readable storage may be volatile or non-volatile, and a program or an instruction is stored on the readable storage medium. When the program or the instruction is executed by a processor, the steps in the information reporting method provided in the embodiments of this application are implemented, or when the program or the instruction is executed by a processor, the steps in the information receiving method provided in the embodiments of this application are implemented.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, an optical disc, or the like.

An embodiment of this application further provides a chip, where the chip includes a processor and a communication interface, and the communication interface is coupled to the processor. The processor is configured to run a program or an instruction to implement each process in the information reporting method embodiment and the information receiving method embodiment, and a same technical effect can be achieved. To avoid repetition, details are not described herein again.

It should be understood that the chip mentioned in this embodiment of this application may also be referred to as a system-level chip, a system chip, a chip system, a system on chip, or the like.

It should be noted that, the term "include", "comprise", or any other variant thereof in this specification is intended to cover a non-exclusive inclusion, so that a process, a method, an object, or an apparatus that includes a series of elements not only includes the elements, but also includes other elements that are expressly listed, or may include elements that are inherent to the process, the method, the object, or the apparatus. Without more limitations, elements defined by a sentence "including one......" does not exclude existence of other same elements in the process, the method, the object, or the apparatus that includes the element. In addition, it should be noted that a scope of the method and the apparatus in the embodiments of this application is not limited to performing functions according to an order that is indicated or discussed, but may further include performing functions in a substantially simultaneous manner or in a reversed order according to the functions involved. For example, the described method may be performed in a different sequence than a described sequence, and various steps may be added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or the part contributing to the existing technology may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. However, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. An information reporting method, comprising:
reporting, by a terminal, indication information, wherein the indication information is used for indicating that maximum total power of the terminal in a target frequency band combination is a sum of maximum power supported by each frequency band in the target frequency band combination.

2. The method according to claim 1, wherein the indication information comprises:
power aggregation supported.

3. The method according to claim 2, wherein in a case that the power aggregation supported is in an enabled state, the power aggregation supported is used for indicating that maximum power of the terminal in the frequency band combination is the sum of the maximum power supported of each frequency band in the frequency band combination.

4. The method according to any one of claims 1 to 3, wherein in a case that the terminal supports power aggregation under a dual connectivity DC condition or a carrier aggregation condition, power of the terminal on each frequency band in the target frequency band combination is independent of each other.

5. The method according to any one of claims 1 to 4, wherein the reporting, by a terminal, indication information comprises:
under a DC condition or a multi-carrier aggregation condition, reporting, by the terminal, the indication information.

6. The method according to any one of claims 1 to 4, wherein supported maximum power of the terminal on a target frequency band in the target frequency band combination corresponds to a maximum power class of the target frequency band, and the target frequency band is any frequency band in the target frequency band combination.

7. An information receiving method, comprising:
receiving, by a network side device, indication information reported by a terminal, wherein the indication information is used for indicating that maximum total power of the terminal in a target frequency band combination is a sum of maximum power supported by each frequency band in the target frequency band combination.

8. The method according to claim 7, wherein the indication information comprises:
power aggregation supported.

9. The method according to claim 7, wherein in a case that the power aggregation supported is in an enabled state, the power aggregation supported is used for indicating that maximum power of the terminal in the frequency band combination is the sum of the maximum power supported of each frequency band in the frequency band combination.

10. The method according to any one of claims 7 to 9, wherein the receiving, by a network side device, indication information reported by a terminal comprises:
under a DC condition or a multi-carrier aggregation condition, receiving, by the network side device, the indication information reported by the terminal.

11. An information reporting apparatus, comprising:
a reporting module, configured to report indication information, wherein the indication information is used for indicating that maximum total power of a terminal in a target frequency band combination is a sum of maximum power supported by each frequency band in the target frequency band combination.

12. The apparatus according to claim 11, wherein in a case that the terminal supports power aggregation under a dual connectivity DC condition or a carrier aggregation condition, power of the terminal on each frequency band in the target frequency band combination is independent of each other.

13. The apparatus according to claim 11, wherein supported maximum power of the terminal on a target frequency band in the target frequency band combination corresponds to a maximum power class of the target frequency band, and the target frequency band is any frequency band in the target frequency band combination.

14. An information receiving apparatus, comprising:
a receiving module, configured to receive indication information reported by a terminal, wherein the indication information is used for indicating that maximum total power of the terminal in a target frequency band combination is a sum of maximum power supported by each frequency band in the target frequency band combination.

15. A terminal, comprising: a memory, a processor, and a program or an instruction stored in the memory and executable on the processor, wherein when the program or the instruction is executed by the processor, the steps in the information reporting method according to any one of claims 1 to 6 are implemented.

16. A network side device, comprising: a memory, a processor, and a program or an instruction stored in the memory and executable on the processor, wherein when the program or the instruction is executed by the processor, the steps in the information receiving method according to any one of claims 7 to 10 are implemented.

17. A readable storage medium, storing a program or an instruction, wherein when the program or the instruction is executed by a processor, the steps in the information reporting method according to any one of claims 1 to 6 are implemented, or when the program or the instruction is executed by a processor, the steps in the information receiving method according to any one of claims 7 to 10 are implemented.

18. A chip, comprising a processor and a communication interface, wherein the communication interface is coupled to the processor, and the processor is configured to run a program or an instruction to implement the steps in the information reporting method according to any one of claims 1 to 6 or implement the steps in the information receiving method according to any one of claims 7 to 10.

19. A computer program product, wherein the computer program product is stored in a non-volatile storage medium, and the computer program product is executed by at least one processor to implement the steps in the information reporting method according to any one of claims 1 to 6 or implement the steps in the information receiving method according to any one of claims 7 to 10.

20. A communication device, configured to implement the steps in the information reporting method according to any one of claims 1 to 6 or implement the steps in the information receiving method according to any one of claims 7 to 10.
